# EUROPÄISCHE PATENTANMELDUNG

(11) **EP 1 150 520 A2**
(43) Veröffentlichungstag der Anmeldung: **31.10.2001**
(21) Anmeldenummer: 01440096.4
(22) Anmeldetag: 05.04.2001
(51) Int. Cl.: H04Q 3/00

(54) **Verfahren zur Unterstützung des Aufbaus von Kommunikationsverbindungen**

(30) Priorität: 28.04.2000 DE 10020911
(71) Anmelder: ALCATEL, 75008 Paris (FR)
(72) Erfinder: Larger, Sascha, 70176 Stuttgart (DE)
(74) Vertreter: Zinsinger, Norbert

(57) **Zusammenfassung**

Die Erfindung betrifft ein Verfahren zur Unterstützung des Aufbaus von Kommunikationsverbindungen zwischen einem rufenden Teilnehmer (B) und einem gerufenen Teilnehmer (A) durch ein Kommunikationsnetz (TELENET) sowie eine Diensteinheit zur Durchführung des Verfahrens. Ein Satz von Rufnummern aus dem Rufnummernbereich des Kommunikationsnetzes (TELENET) wird einer Diensteinheit (NESERV) des Kommunikationsnetzes (TELENET) zugeordnet. Die Diensteinheit (NESERV) verwaltet den ihr zugeordneten Satz von Rufnummern, indem sie auf Anforderung von Dienst-Benutzern (A) Rufnummern (RN) aus dem Satz von Rufnummern als temporäre Rufnummern Dienst-Benutzern (A) zuordnet. Die Diensteinheit (NESERV) initiiert, solange eine Rufnummer aus dem Satz von Rufnummer einem Dienst-Benutzer (A) als temporäre Rufnummer zugeordnet ist, eine Rufumleitung innerhalb des Kommunikationsnetzes (TELENET), die Rufe, die an diese temporäre Rufnummer des Dienst-Benutzers (A) gerichtet sind, an ein Endgerät (TE1 bis TE3) dieses Dienst-Benutzers (A) umleitet.

## Beschreibung

Die Erfindung betrifft ein Verfahren zur Unterstützung des Aufbaus von Kommunikationsverbindungen zwischen einem rufenden Teilnehmer und einem gerufenen Teilnehmer durch ein Kommunikationsnetzes sowie eine Diensteinheit zur Unterstützung des Aufbaus von Kommunikationsverbindungen zwischen einem rufenden Teilnehmer und einem gerufenen Teilnehmer durch ein Kommunikationsnetz.

Eine für das Betreiben von Kommunikationsnetzen wichtige Aufgabe besteht in der Nummernverwaltung. Darunter ist die Verwaltung der Zuordnung von Teilnehmeranschlüssen zu Fernsprechrufnummern in den Leitweglenkungstabellen der Vermittlungsstellen des Kommunikationsnetzes zu verstehen, d. h. die Verwaltung der Adressierung von Teilnehmerendgeräten innerhalb des Kommunikationsnetzen.

In dem Artikel "System 12, Betrieb und Wartung" von E. Bertoli et al., Elektrisches Nachrichtenwesen Band 56, Nummer 2/3, 1981, S. 184 bis 197 ist eine Realisierung einer Nummernverwaltung für einen Teil eines Fernsprechnetzes beschrieben.

Die Zuordnung von Rufnummern zu den Teilnehmeranschlüssen einer oder mehrerer Vermittlungsstellen wird von einem zentralen Betriebs- und Wartungszentrum gesteuert. Diese Zuordnung wird hierbei durch Sperren und Freigeben von Teilnehmeranschlußleitungen und Veränderung der Leitweglenkungstabellen der Vermittlungsstellen verändert. Das Ausführen einer solchen Änderung wird durch die Eingabe eines entsprechenden Änderungsauftrages durch das Bedienungspersonal des Betriebs- und Wartungszentrums bewirkt.

Die Durchführung solcher Änderungen stellt eine Management-Aufgabe des Netzbetreibers dar, an die hohe Sicherheitsanforderungen gestellt werden. Deshalb ist die Eingabe eines solchen Änderungsauftrages nur von bestimmten Bedienungsterminals des Bedienungs- und Wartungszentrums aus möglich und das Bedienungspersonal hat sich durch Paßwörter zu autorisieren.

Weiter ist es bekannt, mittels Diensteinheiten innerhalb von Kommunikationsnetzen IN Dienste (IN =Intelligent Network) anzubieten. Diese Dienste nutzen lediglich die Kommunikations-Infrastruktur des Kommunikationsnetzes und können auf die im Kommunikationsnetz festgelegte Zuordnung zwischen Teilnehmeranschluß und Rufnummer keinen Einfluß nehmen. Diese Dienste werden beispielsweise durch Anwahl einer bestimmten Dienstrufnummer aktiviert. Bei Anwahl der Dienstrufnummer wird hierbei die Durchführung des dieser Dienstrufnummer zugeordneten IN Dienstes durch die Diensteinheit initiiert.

Der Erfindung liegt nun die Aufgabe zugrunde, den Verbindungsaufbau durch ein Kommunikationsnetz kundenfreundlicher zu gestalten.

Diese Aufgabe wird gelöst durch ein Verfahren zur Unterstützung des Aufbaus von Kommunikationsverbindungen nach der Lehre von Anspruch 1 und durch eine Diensteinheit zur Unterstützung des Aufbaus von Kommunikationsverbindungen nach der Lehre von Anspruch 10.

Der Erfindung liegt hierbei der Gedanke zugrunde, die Zuordnung von temporären Rufnummern zu Teilnehmern mittels eines Diensts zu ermöglichen. Hierzu wird dem Dienst eine Satz von Rufnummern zugeordnet. Der Dienst verwaltet diese Rufnummern und ordneten Rufnummer aus diesem Satz von Rufnummern auf Anforderung von Dienst-Benutzern Dienst-Benutzern als temporäre Rufnummern zu.

Der Vorteil der Erfindung besteht darin, daß auf diese Weise Teilnehmern des Kommunikationsnetzes temporäre Rufnummern sehr schnell angeboten werden können. Weiter ist hierfür keine Zwischenschaltung von Bedienpersonal des Netzbetreibers notwendig. Temporäre Rufnummern können vielmehr als spezieller Dienst von eigenständigen Dienstbetreibern angeboten werden. Da kein Eingriff auf die Leitweglenkungstabellen des Kommunikationsnetzes erforderlich wird, ergeben sich auch Vorteile aus Sicht der Betriebssicherheit.

Weitere Vorteile der Erfindung bestehen darin, daß die permanente, persönliche Rufnummer eines Dienst-Benutzers versteckt wird. Der Dienst-Benutzer kann so die temporäre Rufnummer beispielsweise dazu verwenden, um ein Auto oder eine Immobilie in der Zeitung anzubieten. Nach Beendigung der Zuordnung der temporären Rufnummer ist er vor weiteren Anrufen, die dieses Angebot betreffen, geschützt. Weiter ist es auch möglich, daß Makler, Reisebüros, .. mittels des Dienstes temporäre Rufnummern speziellen Objekten oder Angeboten zuordnen.

Weitere vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationssystems mit einer erfindungsgemäßen Diensteinheit.
- Fig. 3: zeigt ein Diagramm, das die Abbildung von Rufnummern auf temporäre Rufnummern verdeutlicht.

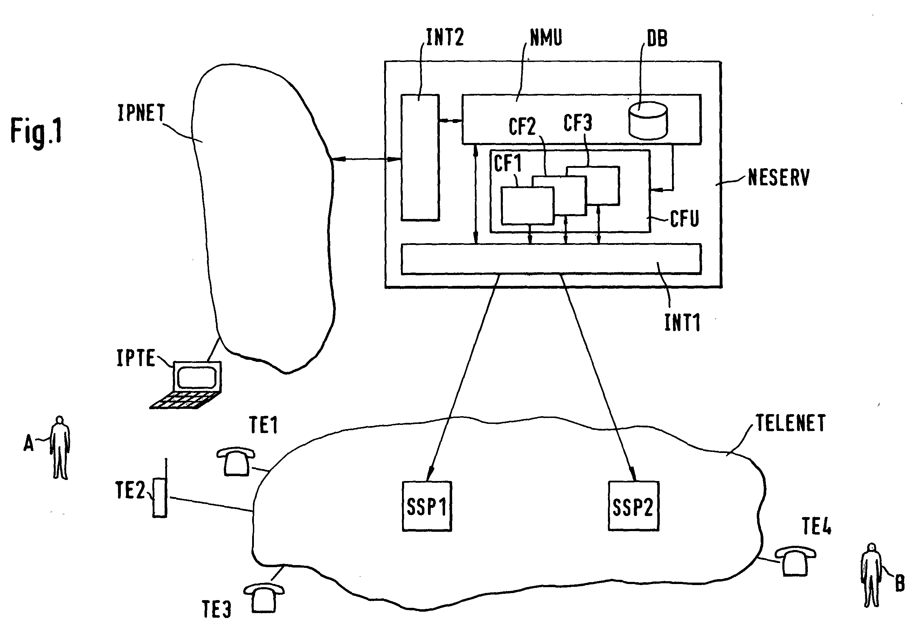

Fig. 1 zeigt zwei Kommunikationsnetz TELENET und IPNET, eine Diensteinheit NESERV, fünf Endgeräte TE1, TE2, TE3, TE4, IPTE und zwei Teilnehmer A und B des Kommunikationsnetzes TELENET. Die Endgeräte TE1, TE2 und IPTE sind dem Teilnehmer A und das Endgerät TE4 ist dem Teilnehmer B zugeordnet. Die Anzahl der Endgeräte und der Teilnehmer sowie deren Zuordnung ist beispielhaft gewählt.

Das Kommunikationsnetz TELENET ist ein Fernsprechnetz. Es ermöglicht die Kommunikation zwischen den Endgeräten TE1 bis TE4. Das Kommunikationsnetz TELENET wird hier von einem Mobilfunknetz, beispielsweise von einem zellularen Mobilfunknetz nach dem GSM Standard (GSM = Global System Mobile Communication) und einem Festnetz, beispielsweise von einem ISDN Fernsprechnetz (ISDN = Integrated Services Digital Network) gebildet. Es ist natürlich auch möglich, daß das Kommunikationsnetz TELENET nur von einem Festnetz oder einem Mobilfunknetz gebildet wird. Weiter ist es möglich, daß das Kommunikationsnetz TELENET ein oder mehrere weitere Fernsprechnetze (Mobilfunk-Netze oder Festnetze) oder Datennetz (z. B. für voice over IP) mitumfaßt, die auch verschiedenen Netzbetreibern zugeordnet sein können.

Das Kommunikationsnetz TELENET weist mehrere besonders ausgestaltete Vermittlungsstellen auf, die eine Dienstvermittlungsfunktion gemäß einer IN Architektur (IN= Intelligent Network) erbringen. Von diesen Vermittlungsstellen sind in Fig. 1 beispielhaft zwei Dienstvermittlungsstellen SSP1 und SSP2 gezeigt.

Das Kommunikationsnetz IPNET ist ein IP-Netz, also ein Datennetz, das als Layer 3 Kommunikationsprotokoll das IP Protokoll (IP = Internet Protocol) verwendet. Bei dem Endgerät IPTE handelt es sich um ein Endgerät, das mit den notwendigen Kommunikationskomponenten zur Kommunikation über das Kommunikationsnetz IPNET ausgestattet ist. Es handelt sich bei dem Endgerät IPTE beispielsweise um einen Computer mit einem WEB-Browser, der mit einem Modem oder einer Netzwerkkarte ausgestattet ist.

Die Diensteinheit NESERV ist ein Netzwerkserver, der Netzdienste innerhalb des Kommunikationsnetzes TELENET zur Verfügung stellt, beispielsweise ein Netzwerkserver, der über IN- oder WAP-Mechanismen (IN= Intelligent Network, WAP = Wireless Application Protocol) Einfluß auf die Verbindungssteuerung des Kommunikationsnetzes TELENET nimmt. Die Diensteinheit NESERV kann auch Teil der Steuerung einer Vermittlungsstelle des Kommunikationsnetzes TELENET sein und einen ISDN basierten Dienst innerhalb des Kommunikationsnetzes TELENET zur Verfügung stellen. Im Folgenden wird davon ausgegangen, daß die Diensteinheit NESERV über IN- Mechanismen Einfluß auf die Verbindungssteuerung des Kommunikationsnetzes TELENET nimmt.

Ein Satz von Rufnummern aus dem Rufnummernbereich des Kommunikationsnetzes TELENET wird der Diensteinheit NESERV des Kommunikationsnetzes TELENET zugeordnet. Die Diensteinheit NESERV verwaltet den ihr zugeordneten Satz von Rufnummern und ordnet auf Anforderung von Dienst-Benutzern, beispielsweise auf Anforderung vom Teilnehmer A, Rufnummern aus dem Satz von Rufnummern als temporäre Rufnummern Dienst-Benutzern zu. Solange eine Rufnummer aus dem Satz von Rufnummer einem Dienst-Benutzer als temporäre Rufnummer zugeordnet ist, initiiert die Diensteinheit NESERV eine Rufumleitung innerhalb des Kommunikationsnetzes TELENET, die Rufe, die an diese temporäre Rufnummer des Dienst-Benutzers gerichtet sind, an ein Endgerät dieses Dienst-Benutzers, beispielsweise an das Endgerät TE1 oder TE2 umleitet. Initiiert beispielsweise der Teilnehmer B durch Wählen der temporären Rufnummer des Teilnehmers A den Aufbau einer Kommunikationsverbindung durch das Kommunikationsnetz TELENET, so wird ein Ruf mit der von der Diensteinheit NESERV verwalteten temporären Rufnummer des Teilnehmers durch das Kommunikationsnetz TELENET geleitet. Durch die Diensteinheit NESERV wird sodann in diesem Ruf die gerufene temporäre Rufnummer des Teilsnehmers A in eine einem Endgerät des Teilnehmers A innerhalb des Kommunikationsnetzes TELENET zugeordnete Rufnummer umwertet, beispielsweise in die Rufnummer des Endgerätes TE1 oder TE2 umgewertet. Die Diensteinheit NESERV stellt so dem Teilnehmer A eine temporäre Rufnummer innerhalb des Nummerierungsbereiches des Kommunikationsnetzes TELENET zur Verfügung.

Im folgenden wird nun der detaillierte Aufbau der Diensteinheit NESERV beschrieben.

Die Diensteinheit NESERV dient der Unterstützung des Aufbaus von Kommunikationsverbindungen zwischen rufenden Teilnehmer und gerufenen Teilnehmern durch das Kommunikationsnetz TELENET. Die Diensteinheit NESERV wird von einem oder von mehreren über ein Kommunikationsmedium verbundenen Rechnern gebildet, auf dem eine SW Systemplattform, bestehen beispielsweise aus einem Betriebssystem und einem Datenbanksystem, und Applikationsprogramme aufsetzen. Diese Applikationsprogramme steuern bei ihrem Ablauf auf der Systemplattform der Diensteinheit NESERV die Funktionen der Diensteinheit NESERV und Steuern damit die Erbringung der im Folgenden beschriebenen Funktionen der Diensteinheit NESERV.

Aus funktioneller Sicht weist die Diensteinheit NESERV zwei Kommunikationseinheiten INT1 und INT2, eine Rufnummern-Verwaltungseinheit NMU und eine Rufumleitungseinheit CFU auf.

Die Kommunikationseinheit INT1 dient der Kommunikation mit Elementen des Kommunikationsnetzes TELENET, beispielsweise der Kommunikation mit Dienstvermittlungsstellen des Kommunikationsnetzes TELENET.

Sie stellt die notwendigen Kommunikationsmechanismen zur Erbringung eines Dienstes innerhalb des Kommunikationsnetzes TELENET zur Verfügung. Der hierfür beispielsweise für eine IN Anbindung von der Kommunikationseinheit INT1 bearbeitete Protokollstack besteht aus Nr. 7 Protokollen, die als Transportprotokolle verwendet werden und aus einem darauf aufsetzenden INAP Protokoll (INAP = Intelligent Network Application Protocol). Es ist auch möglich, andere Transportprotokolle zu verwenden, beispielsweise ein ETHERNET Protokoll oder ein sonstiges LAN Protokoll (LAN = Local Area Network), auf dem ein IP Protokoll aufsetzt. Auch speziell an Mobilfunk-Netze angepaßte INAP Protokolle können verwendet werden.

Innerhalb der IN Architektur erbringt die Diensteinheit NESERV eine Dienststeuerfunktion, sie stellt somit eine Dienststeuereinheit gemäß der IN Architektur dar, die mit einer oder mehren Dienstvermittlungsstellen des Kommunikationsnetzes TELENET kommuniziert. Die für die Kommunikation Dienststeuerfunktion - Dienstvermittlungsfunktion notwendigen Funktion werden ebenfalls von der Kommunikationseinheit INT1 erbracht.

Die Kommunikationseinheit INT2 stellt die notwendigen Kommunikationsmechanismen zur Kommunikation über das Kommunikationsnetz IPNET bereit. Der Protokollstack für diese Kommunikation besteht beispielsweise aus einem LAN Protokoll (LAN = Local Area Network) oder ATM Protokoll (ATM = Asynchronous Transfer Modus), auf dem ein TCP/IP Protokollstack aufsetzt. (TCP = Transport Capability Protocol). Auf die Kommunikationseinheit INT2 könnte auch verzichtet werden.

Die Rufnummern-Verwaltungseinheit NMU verwaltet den der Diensteinheit NESERV innerhalb des Kommunikationsnetzes TELENET zugeordneten Satz von Rufnummern aus dem Rufnummernbereich des Kommunikationsnetzes. Sie legt die Zuordnung der Rufnummern aus dem Satz von Rufnummern zu Teilnehmern des Kommunikationsnetzes TELENET fest, speichert diese Zuordnung und steuert die Veränderung dieser Zuordnung. Hierbei ordnet sie Rufnummern aus dem Satz von Rufnummern als temporäre Rufnummern Dienst-Benutzern zu. Diese Zuordnung von temporären Rufnummern zu Teilnehmern realisiert sie mittels einer Datenbank DB, in der diese Zuordnungen abgespeichert werden.

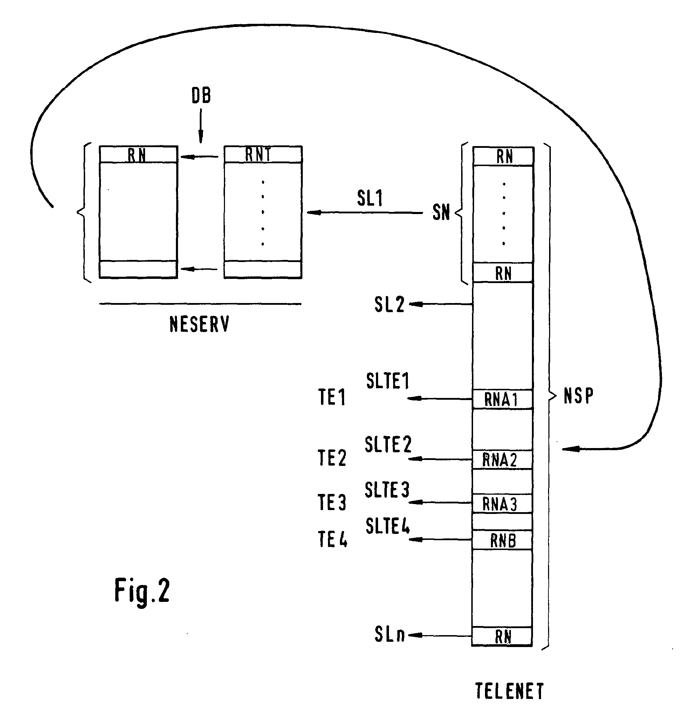

Die durch die Rufnummern-Verwaltungseinheit NMU erreichte Zuordnung von Rufnummern innerhalb des Kommunikationsnetzes TELENET wird beispielhaft anhand von Fig. 2 erläutert.

Fig. 2 zeigt einen Nummerierungsbereich NSP mit einer Vielzahl von Rufnummern RN, RNA1, RNA2, RNB, die durch die Leitweglenkungstabellen der Vermittlungsknoten des Kommunikationsnetzes TELENET Teilnehmeranschlüssen SL1, SL2, SLTE1 bis SLTE4 und SLn zugeordnet sind. Diese Teilnehmeranschlüssen sind wiederum Endgeräten des Telekommunikationsnetzes TELENET zugewiesen. So sind den Teilnehmeranschlüssen SLTE1 bis SLTE4 jeweils die Endgeräte TE1, TE2, TE3 bzw. TE4 zugewiesen.

Ein Satz SN von Rufnummern RN des Nummerierungsbereiches NSP ist dem Teilnehmeranschluß SL1 zugeordnet, der der Diensteinheit NESERV zugewiesen ist. Bei diesem Satz SN von Rufnummern braucht es sich hierbei nicht um einen zusammenhängenden Rufnummernbereich zu handeln. Die Rufnummern RN dieses Satzes SN von Rufnummern werden von der Diensteinheit NESERV verwaltet und bilden potentielle temporäre Rufnummern RNT. Ist eine Rufnummer aus dem Satz SN von Rufnummern einem Teilnehmer des Kommunikationsnetzes TELENET durch die Diensteinheit NESERV als temporäre Rufnummer RNT zugeordnet, so wird diese Rufnummer von der Datenbank DB diesem Teilnehmer und somit mindestens einer Rufnummern RN aus dem Nummerierungsbereiches NSP zugeordnet.

Die Rufnummern-Verwaltungseinheit NMU nach Fig. 1 verwaltet die Rufnummern aus dem Satz von Rufnummern und ordnet Rufnummern aus dem Satz von Rufnummern auf Anforderung von Dienst-Benutzern als temporäre Rufnummern Dienst-Benutzern zu. Dienst-Benutzer sind hierbei Teilnehmer des Kommunikationsnetzes TELENET, die den mittels der Diensteinheit NESERV bereitgestellten Dienst in Anspruch nehmen.

Der Zugriff von Dienst-Benutzern auf die Rufnummern-Verwaltungseinheit NMU erfolgt vorzugsweise über das Kommunikationsnetz IPNET und die Kommunikationseinheit INT2, beispielsweise mittels des Endgerätes IPTE. Die Rufnummern-Verwaltungseinheit NMU stellt hierbei Dienst-Benutzern ein WEB Interface bereit, mittels dem die Dienst-Benutzer die Zuordnung einer temporären Rufnummer zu diesem Dienst-Benutzer oder zu einem anderen Dienst-Benutzer mittels eines IP-Endgerätes mit einem WEB-Browser anfordern können.

Der Zugang auf die Rufnummern-Verwaltungseinheit NMU kann aber auch mittels eines Endgeräts erfolgen, das das WAP Protokoll (WAP= Wireless Application Protocol) unterstützt. Es ist jedoch auch möglich, daß die Rufnummern-Verwaltungseinheit NMU anstelle eines WEB und/oder WAP Interfaces oder zusätzlich zu diesem Interface einen IN Dienst bereitstellt, der es ermöglicht, mittels eines normalen Endgerätes, vorzugsweise eines Mobilfunk-Endgerätes, die Anforderung von temporären Rufnummern durch Teilnehmer des Kommunikationsnetzes TELENET zu ermöglichen. In diesem Fall würde der Zugriff auf die Rufnummern-Verwaltungseinheit NMU über die Kommunikationseinheit INT1 erfolgen.

Zur Anforderung einer temporären Rufnummer greift ein Dienst-Benutzer, beispielsweise der Teilnehmer A, mittels eines IP Endgerätes, beispielsweise mittels des IP Endgerätes IPTE, auf die Rufnummern-Verwaltungseinheit NMU zu. Die Rufnummern-Verwaltungseinheit NMU ermittelt sodann die Identität des Dienst-Benutzers und führt hierbei vorzugsweise eine Authentisierungs-Prozedur durch, um sich über die Identität des Dienst-Benutzers sicher zu sein. Sodann fordert die Rufnummern-Verwaltungseinheit NMU den Dienst-Benutzer auf, eine temporäre Rufnummer anzufordern. Ist die angeforderte temporäre Rufnummer noch nicht an einen anderen Dienst-Benutzer vergeben, so ordnet sie die diese temporäre Rufnummer dem anfordernden Dienst Benutzer oder einem von dem Dienst-Benutzer in der Anforderung angegebenen anderen Dienst-Benutzer in der Datenbank DB zu. Weiter ordnet sie dem Dienst-Benutzer in der Datenbank DB auch eine oder mehrere Rufnummer des Kommunikationsnetzes TELENET zu. Dies Zuordnung kann automatisch geschehen. Zum Beispiel kann der Dienst-Benutzer durch seine Rufnummer identifiziert sein, so daß in der Datenbank DB lediglich eine Zuordnung von temporären Rufnummern zu Teilnehmerrufnummern abgespeichert ist. Die Rufnummern können auch aus einem teilnehmerspezifischen Benutzerprofil entnommen sein oder es kann in der Datenbank DB auf ein solches Benutzerprofil verwiesen sein. Ein solches Benutzerprofil kann von einem Dienst-Benutzer durch Zugriff auf die Rufnummern-Verwaltungseinheit NMU eingerichtet werden. Es kann aber auch auf ein Benutzerprofil zugegriffen werden, das für einen anderen Dienst angelegt wurde. Es ist natürlich auch möglich, daß diese Rufnummer oder diese Rufnummern von dem Dienst-Benutzer in der Anforderung angegeben werden.

Es ist vorteilhaft, daß dem Dienst-Benutzer bei der Anforderung einer temporären Rufnummer Informationen über solche Rufnummern aus dem Satz von Rufnummern von der Rufnummern-Verwaltungseinheit NMU übermittelt werden, die noch nicht einem Dienst-Benutzer als temporäre Rufnummern zugeordnet sind. Der Dienst-Benutzer kann beispielsweise eine List noch nicht vergebenen Rufnummern übermittelt erhalten und aus dieser List sodann diejenige Rufnummer als seine temporäre Rufnummer auswählen, die ihm am besten gefällt.

Weiter ist es vorteilhaft, daß der Dienst-Benutzer (A) bei der Anforderung einer temporären Rufnummer eine Zeitperiode wählt, während der ihm die temporäre Rufnummer von der Diensteinheit NESERV bereitgestellt wird. Diese Zeitperiode wird hierbei vom Dienst-Benutzer der Rufnummern-Verwaltungseinheit NMU übermittelt oder vom Dienst-Benutzer aus einer ihm von der Rufnummern-Verwaltungseinheit NMU übermittelten (freien) Zeitperiode ausgewählt. Die gewählte Zeitperiode wird mit der Zuordnung in der Datenbank DB abgespeichert. Die gewählte Zeitperiode kann hierbei auch in der Zukunft liegen. Vor der Eintragung wird von der Rufnummern-Verwaltungseinheit NMU überprüft, ob die gewünschte Rufnummer während der gewünschten Zeitperiode noch frei ist. Es ist hierbei auch möglich, daß die Rufnummern-Verwaltungseinheit NMU zwischen der Benutzung einer temporären Rufnummer durch zwei verschiedene Dienst-Benutzer eine bestimmte Mindest-Zeitperiode vorsieht, in der die Rufnummer keinem Dienst-Benutzer als temporäre Rufnummer zugeordnet ist.

Weiter ist es vorteilhaft, daß der Dienst-Benutzer bei der Anforderung einer temporären Rufnummer die Art der Vergebührung von an die temporäre Rufnummer gerichteten Rufen festlegt, beispielsweise ob es sich bei der Rufnummer um eine für den Anrufer gebührenfreien oder gebührenreduzierten Rufnummer handeln soll. Diese Information wird sodann von der Rufnummern-Verwaltungseinheit NMU in der Datenbank DB bei der entsprechenden Zuordnung abgespeichert.

Weiter ist es vorteilhaft, daß von der Rufnummern-Verwaltungseinheit NMU ein persönliches Benutzer-Profils des Dienst-Benutzers ermittelt wird und dieses Benutzerprofil oder ein Verweis auf dieses Benutzerprofil bei der entsprechenden Zuordnung in der Datenbank DB abgespeichert wird. In dem persönlichen Benutzer-Profils des Dienst-Benutzers sind dem Dienst-Benutzer zwei oder mehr Endgeräte zugeordnet. Diesen Endgeräten sind weitere Parameter zugeordnet, die Kriterien für die Auswahl eines Endgerätes aus diesen Endgeräten festlegen.

Weiter ist es vorteilhaft, daß ein Dienst-Benutzer von der Diensteinheit NESERV für die Bereitstellung einer temporären Rufnummer automatisch vergebührt wird. Die Diensteinheit sendet hierzu beispielsweise eine Vergebührungsnachricht an die Vergebührungszentrale des Betreibers des Kommunikationsnetzes TELENET. Die Höhe der Vergebührung kann beispielsweise von der Zeitperiode abhängen, für die dem Dienst-Benutzer die temporäre Rufnummer zugeordnet wird. Es ist auch möglich, daß bei jeder Verwendung der temporären Rufnummer durch einen rufenden Teilnehmer eine Gebühr anfällt und eine entsprechende Vergebührungsnachricht erzeugt und versendet wird.

Die Rufumleitungseinheit CFU weist mehrere Rufumleitungslogika CF1 bis CF3 auf.

Die Rufumleitungseinheit CFU initiiert, solange eine Rufnummer aus dem Satz von Rufnummern einem Dienst-Benutzer als temporäre Rufnummer zugeordnet ist, eine Rufumleitung innerhalb des Kommunikationsnetzes TELENET, die Rufe, die an diese temporäre Rufnummer des Dienst-Benutzers gerichtet sind, an ein Endgerät dieses Dienst-Benutzers umleitet.

Hierzu greif die Rufumleitungseinheit CFU auf die Datenbank DB der Rufnummern-Verwaltungseinheit NMU zu. Der Datenbank DB entnimmt die Rufumleitungseinheit CFU sodann die Information, welchen temporären Rufnummern Teilnehmer zugeordnet sind, welchen Teilnehmern diese Rufnummern zugeordnet sind und zu welcher Zeitperiode sie diesen Teilnehmern zugeordnet sind. Entsprechend diesen Informationen erzeugt und beendet die Rufumleitungseinheit CFU sodann Rufumleitungslogika, beispielsweise die Rufumleitungslogika CF1 bis CF3.

Die Rufumleitungslogika CF1 bis CF3 steuern jeweils eine Rufumleitung von einer temporäre Rufnummer zu einer oder mehreren dieser temporären Rufnummer gemäß der Datenbank DB zugeordneten Rufnummern. Hierzu senden sie über die Kommunikationseinheit INT1 Steuerbefehlen an die Dienstvermittlungsstellen SSP1 und SSP2 und weisen diese an, in an die jeweilig temporäre Rufnummer gerichteten Rufen die gerufene Rufnummer in eine einem Endgerät des zugeordneten Dienst-Benutzers innerhalb des Kommunikationsnetzes TELENET zugeordnete Rufnummer umwertet.

Sendet beispielsweise das Endgerät TE4 an das Kommunikationsnetz TELENET eine Verbindungsanforderung, die an eine dem Teilnehmer A zugeordneten temporären Rufnummer gerichtet ist, so wird eine Dienstvermittlungsstelle des Kommunikationsnetzes TELENET, beispielsweise die Dienstvermittlungsstelle SSP1, für diesen Ruf getriggert. Die Dienstvermittlungsstelle SSP1 sendet eine entsprechende Dienstanforderungsnachricht an die Diensteinheit NESERV, wodurch die der temporären Rufnummer zugeordnete Rufumleitungslogik, beispielsweise die Rufumleitungslogik CF1, für diesen Ruf getriggert wird. Sind der temporären Rufnummer in der Datenbank DB mehrere Rufnummern des Teilnehmers A zugeordnet, so wählt die Rufumleitungslogik mittels der zugeordneten Parameterdaten eine dieser Rufnummern aus.

Die Rufumleitungslogik CF1 leitet sodann den Ruf dadurch um, daß sie ein entsprechendes INAP Kommando mit der ermittelten Rufnummer an die Dienstvermittlungsstelle SSP1 sendet und dadurch diese anweist, den "wartende" Ruf mit dieser ermittelten Rufnummer als Rufnummer des gerufenen Teilnehmers weiterzuleiten und somit eine Rufumleitung zu dieser ermittelten Rufnummer zu initiieren.

## Patentansprüche

1. Verfahren zur Unterstützung des Aufbaus von Kommunikationsverbindungen zwischen einem rufenden Teilnehmer (B) und einem gerufenen Teilnehmer (A) durch ein Kommunikationsnetz (TELENET),
**dadurch gekennzeichnet, daß** ein Satz (SN) von Rufnummern (RN) aus dem Rufnummernbereich (NSP) des Kommunikationsnetzes (TELENET) einer Diensteinheit (NESERV) des Kommunikationsnetzes (TELENET) zugeordnet wird, daß die Diensteinheit (NESERV) den ihr zugeordneten Satz (SN) von Rufnummern verwaltet und auf Anforderung von Dienst-Benutzern (A) Rufnummern (RN) aus dem Satz (SN) von Rufnummern als temporäre Rufnummern (RNT) Dienst-Benutzern (A) zuordnet, daß die Diensteinheit (NESERV), solange eine Rufnummer (RN) aus dem Satz (SN) von Rufnummern einem Dienst-Benutzer (A) als temporäre Rufnummer (RNT) zugeordnet ist, eine Rufumleitung innerhalb des Kommunikationsnetzes (TELENET) initiiert, die Rufe, die an diese temporäre Rufnummer (RNT) des Dienst-Benutzers (A) gerichtet sind, an ein Endgerät (TE1 bis TE3) dieses Dienst-Benutzers (A) umleitet, indem sie in solchen Rufen die gerufene temporäre Rufnummer (RNT) in eine einem Endgerät (TE1 bis TE3) des Dienst-Benutzers (A) innerhalb des Kommunikationsnetzes (TELENET) zugeordnete Rufnummer (RN) umwertet.

2. Verfahren nach Anspruch 1, **dadurch gekennzeichnet, daß** dem Dienst-Benutzer (A) bei der Anforderung einer temporären Rufnummer (RNT) Informationen über solche Rufnummern aus dem Satz von Rufnummern von der Diensteinheit (NESERV) übermittelt werden, die noch nicht einem Dienst-Benutzer (A) als temporäre Rufnummer (RNT) zugeordnet sind.

3. Verfahren nach Anspruch 1, **dadurch gekennzeichnet, daß** der Dienst-Benutzer (A) bei der Anforderung einer temporären Rufnummer (RNT) eine Zeitperiode wählt, während der ihm die temporäre Rufnummer (RNT) von der Diensteinheit (NESERV) zugeordnet wird.

4. Verfahren nach Anspruch 1, **dadurch gekennzeichnet, daß** der Dienst-Benutzer (A) bei der Anforderung einer temporären Rufnummer (RNT) die Art der Vergebührung von an die temporäre Rufnummer (RNT) gerichteten Rufen festlegt.

5. Verfahren nach Anspruch 1, **dadurch gekennzeichnet, daß** von der Diensteinheit (NESERV) bei der Initiierung einer Rufumleitung einer temporären Rufnummer (RN) zwei oder mehr Endgeräte eines Dienst-Benutzers gemäß eines persönlichen Benutzer-Profils des Dienst-Benutzers (A) zugeordnet werden.

6. Verfahren nach Anspruch 1, **dadurch gekennzeichnet, daß** ein Dienst-Benutzer (A) von der Diensteinheit (NESERV) für die Bereitstellung einer temporären Rufnummer (RNT) vergebührt wird.

7. Verfahren nach Anspruch 1, **dadurch gekennzeichnet, daß** ein Dienst-Benutzer (A) über ein WEB Interface (INT1) von der Diensteinheit (NESERV) die Zuordnung einer temporären Rufnummer (RNT) anfordert.

8. Verfahren nach Anspruch 1, **dadurch gekennzeichnet, daß** ein Dienst-Benutzer über einen IN Dienst von der Diensteinheit (NESERV) die Zuordnung einer temporären Rufnummer (RNT) anfordert.

9. Verfahren nach Anspruch 1, **dadurch gekennzeichnet, daß** ein Dienst-Benutzer über einen WAP Interface von der Diensteinheit die Zuordnung einer temporären Rufnummer anfordert.

10. Diensteinheit (NESERV) zur Unterstützung des Aufbaus von Kommunikationsverbindungen zwischen einem rufenden Teilnehmer (B) und einem gerufenen Teilnehmer (A) durch ein Kommunikationsnetz (TELENET),
**dadurch gekennzeichnet, daß** die Diensteinheit (NESERV) mit einer Rufnummern-Verwaltungseinheit (NMU) ersehen ist, die so ausgestaltet ist, daß sie einen der Diensteinheit (NESERV) innerhalb des Kommunikationsnetzes (TELENET) zugeordneten Satz (SN) von Rufnummern (RN) aus dem Rufnummernbereich (NSP) des Kommunikationsnetzes (TELENET) verwaltet und auf Anforderung von Dienst-Benutzern (A) Rufnummern (RN) aus dem Satz (SN) von Rufnummern als temporäre Rufnummern (RNT) Dienst-Benutzern (A) zuordnet, daß die Diensteinheit (NESERV) mit einer Rufumleitungseinheit (CFU) versehen ist, die so ausgestaltet ist, daß sie, solange eine Rufnummer (RN) aus dem Satz (SN) von Rufnummern einem Dienst-Benutzer (A) als temporäre Rufnummer (RNT) zugeordnet ist, eine Rufumleitung innerhalb des Kommunikationsnetzes (TELENET) initiiert, die Rufe, die an diese temporäre Rufnummer (RNT) des Dienst-Benutzers (A) gerichtet sind, an ein Endgerät (TE1 bis TE3) dieses Dienst-Benutzers (A) umleitet, indem sie in solchen Rufen die gerufene temporäre Rufnummer (RNT) in eine einem Endgerät (TE1 bis TE3) des Dienst-Benutzers innerhalb des Kommunikationsnetzes (TELENET) zugeordnete Rufnummer (RN) umwertet.

11. Diensteinheit (NESERV) nach Anspruch 10, **dadurch gekennzeichnet, daß** die Diensteinheit mit einer Schnittstelleneinheit (INT2) versehen ist, die so ausgestaltet ist, daß sie den Zugriff von Dienst-Benutzern (A) auf die Rufnummern-Verwaltungseinheit (NMU) über ein IP Netz (IPNET) ermöglicht.

12. Diensteinheit (NESERV) nach Anspruch 10, **dadurch gekennzeichnet, daß** die die Diensteinheit (NESERV) eine Dienststeuereinheit gemäß der IN Architektur ist, die mit einer oder mehren Dienstvermittlungsstellen (SSP1 bis SSP2) des Kommunikationsnetzes (TELENET) kommuniziert.
